# EUROPEAN PATENT APPLICATION

(11) **EP 4 475 313 A1**
(43) Date of publication of application: **11.12.2024**
(21) Application number: 23747039.8
(22) Date of filing: 26.01.2023
(51) Int. Cl.: H01M 50/35, H01G 11/10, H01G 11/78, H01M 50/202, H01M 50/204, H01M 50/213, H01M 50/289, H01M 50/291, H01M 50/342

(54) **ELECTRICITY STORAGE PACK**

(30) Priority: 31.01.2022 JP 2022013540
(71) Applicant: Panasonic Intellectual Property Management Co., Ltd., Kadoma-shi, Osaka 571-0057 (JP)
(72) Inventor: OGINO, Hirotaka, Kadoma-shi, Osaka 571-0057 (JP); MURAYAMA, Chifumi, Kadoma-shi, Osaka 571-0057 (JP)
(74) Representative: Novagraaf International SA
(86) International application number: PCT/JP2023/002463
(87) International publication number: WO 2023/145829

(57) **Abstract**

A power storage pack includes: at least one power storage block including at least one power storage device including an exhaust valve; pack case 80 accommodating the at least one power storage block and including an exhaust port; hollow member 60 interposed between pack case 80 and the at least one power storage block, a part of the hollow member facing the exhaust valve of the at least one power storage device; and a resin filler interposed between the at least one power storage device and hollow member 60. Hollow member 60 includes opening 61 and an outer surface any of which is connected to exhaust port 81 of pack case 80.

## Description

### TECHNICAL FIELD

The present disclosure relates to a power storage pack.

### BACKGROUND ART

In general, a power storage device such as a cylindrical lithium-ion battery is used in the form of a power storage pack in which a plurality of power storage devices is electrically connected to each other and housed in a case. At this time, when a power storage device in the power storage pack has an abnormality, the power storage device generates high temperature gas. This high temperature gas remaining in the power storage pack may adversely affect a power storage device in a normal state. Thus, the power storage pack is provided inside with an exhaust path to exhaust the high temperature gas to the outside of the case through the exhaust path.

PTL 1 discloses a power storage device (power storage pack) as an example of a power storage pack, in which a plurality of batteries each including an exterior container in the shape of a rectangular box is housed in a storage container body (pack case). Each battery has a side wall provided with a safety valve (exhaust valve) that is broken when internal pressure increases. The storage container body is provided inside with a collection space partitioned by a partition wall from a battery placement space, and the safety valve of the battery faces a collection port formed in the partition wall. This configuration intends to collect electrolytic solution ejected from the battery and flame of the electrolytic solution into the collection space through the collection port due to breakage of the safety valve of the battery.

### Citation List

### Patent Literature

PTL 1: Unexamined Japanese Patent Publication No. 2014-160573

### SUMMARY OF THE INVENTION

The configuration disclosed in PTL 1 includes the collection space that corresponds to an exhaust path of gas ejected from the battery. Alternatively, to improve safety at the time of thermal runaway of a battery, it is conceivable to dispose and cure a potting material (resin filler) around the battery to absorb or alleviate heat of the battery with an abnormality having occurred with the potting material. Unfortunately, when the configuration in which the potting material is injected around the battery is used in the configuration disclosed in PTL 1, the potting material before curing may enter the gas exhaust path through the collection port during assembly of the power storage pack to fill the gas exhaust path with the potting material, and thus high temperature gas may fail to be satisfactorily exhausted from the battery when the battery is in an abnormal state. Even structure in which the high temperature gas of the battery is exhausted to the outside of the power storage pack through the gas exhaust path of the pack case of the power storage pack may cause an inconvenience in PTL 1 as in when the potting material is used. Thus, this structure has room for improvement in terms of improvement in reliability of the power storage pack. This structure further has room for improvement in terms of simplification of structure.

It is an object of the present disclosure to provide a power storage pack simplified in structure and improved in reliability in a configuration in which a resin filler is disposed around a power storage device.

A power storage pack of the present disclosure includes: at least one power storage block including at least one power storage device including an exhaust valve; a pack case accommodating the at least one power storage block and including an exhaust port; a hollow member interposed between the pack case and the at least one power storage block, a part of the hollow member facing the exhaust valve of the at least one power storage device; and a resin filler interposed between the at least one power storage device and the hollow member, the hollow member including an opening and an outer surface any of which is connected to the exhaust port of the pack case.

The power storage pack of the present disclosure enables the configuration, in which the resin filler is disposed around the power storage device, to be simplified in structure and improved in reliability.

### BRIEF DESCRIPTION OF THE DRAWINGS

Fig. 1A is a schematic sectional view of a battery pack according to an exemplary embodiment.
Fig. 1B is an enlarged view corresponding to part A of the battery pack of Fig. 1.
Fig. 2 is a perspective view illustrating a hollow member taken out from the battery pack of Fig. 1.
Fig. 3 is a schematic sectional view illustrating an example of a method for injecting a potting material into a battery pack.
Fig. 4 is a schematic sectional view illustrating a state in which an abnormality has occurred in some batteries constituting the battery pack of Fig. 1 and high temperature gas is exhausted to the outside from the battery in which the abnormality has occurred.
Fig. 5 is a diagram corresponding to an enlarged view of part B of Fig. 4 showing a state in which high temperature gas is exhausted trough openings of a hollow member in another example of a battery pack.
Fig. 6 is a schematic sectional view illustrating a state in which an abnormality has occurred in some batteries in a battery pack of a comparative example and high temperature gas is exhausted to the outside from a battery in which the abnormality has occurred.

### DESCRIPTION OF EMBODIMENT

Hereinafter, an exemplary embodiment of the present disclosure will be described with reference to the drawings. Shapes, materials, directions, and numbers to be described below are examples, and can be appropriately changed according to specifications of a power storage pack. Hereinafter, the power storage pack will be exemplified using a battery pack using a lithium-ion secondary battery as a power storage device. However, the power storage pack of the present disclosure is not limited thereto.
The power storage device may be another secondary battery such as a nickel hydrogen battery or a capacitor such as an electric double layer capacitor.

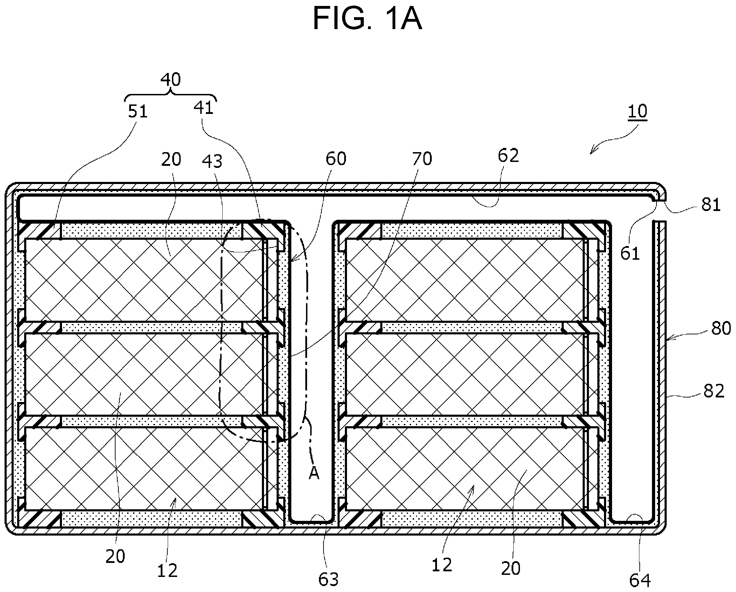

Fig. 1A shows a schematic configuration of battery pack 10. Battery pack 10 is used as a power source for a device driven by an electric motor, such as for an electric car, an electric assist bicycle, or an electric motorcycle. Battery pack 10 is not limited to application above, and can be used as a power source for various electric devices.

Battery pack 10 includes battery block 12 corresponding to a plurality of power storage blocks housing a plurality of batteries, and pack case 80 housing a plurality of battery blocks 12. As each battery, a non-aqueous electrolyte secondary battery such as a lithium-ion battery is used, for example. The battery is not particularly limited in shape, size, and the like, and preferably has a cylindrical shape. Hereinafter, the battery being a cylindrical battery will be mainly described. Battery block 12 includes a plurality of batteries 20 and holder 40, and the plurality of batteries 20 each include opposite ends in a predetermined direction, specifically in a length direction, the opposite ends are each accommodated in corresponding one of first holder 41 and second holder 51 constituting holder 40. Fig 1A illustrates battery 20 with a slanted lattice. When the battery is a rectangular battery, opposite ends of the battery in a height direction as a predetermined direction may be accommodated in a battery holder.

Pack case 80 has the shape of a substantially rectangular parallelepiped box made of resin or metal. Pack case 80 is provided inside with a plurality of battery blocks 12 disposed separately in the length direction (the left-right direction in Fig. 1A). Pack case 80 is provided inside with an upper end part in which an upper part of hollow member 60 described later is disposed. Hollow member 60 includes opening 61 that communicates with the outside through exhaust port 81 provided in pack case 80. Exhaust port 81 is a small hole having a diameter of about several mm, for example. Hollow member 60 exhausts gas exhausted from at least a part of the plurality of batteries 20 to the outside through exhaust port 81. Hereinafter, battery 20 is referred to as battery 20.

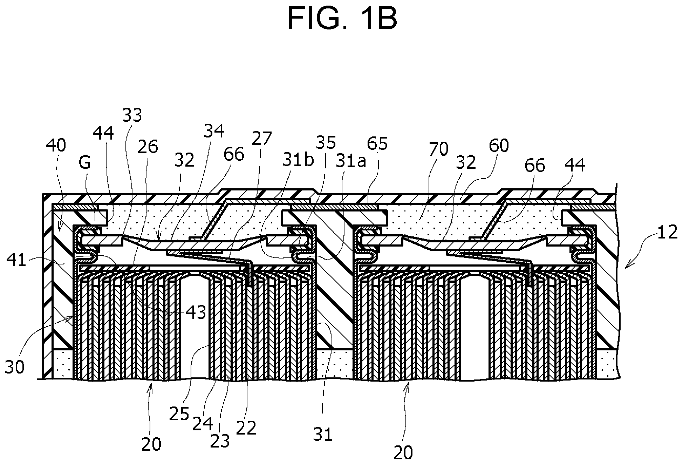

Battery 20 will be described with reference to Fig. 1B. Battery 20 is a lithium-ion secondary battery or the like, and includes electrode group 22, a non-aqueous electrolyte (not illustrated), and battery case 30 that accommodates electrode group 22 and the non-aqueous electrolyte. Battery case 30 is made of metal, and includes case body 31 having a substantially cylindrical shape with a bottom, and sealing body 32 that closes an upper end opening of case body 31 in an insulated state.

Electrode group 22 is a winding-type electrode group in which positive electrode 23 in the shape of a strip and negative electrode 24 in the shape of a strip are wound with separator 25 in the shape of a strip interposed therebetween. Electrode group 22 includes upper and lower ends on each of which insulating plate 26 is disposed. Positive electrode 23 is connected to positive electrode tab 27 that extends upward to be connected to a bottom surface of sealing body 32. Negative electrode 24 includes an outermost peripheral surface that comes into contact with an inner peripheral surface of battery case 30 to electrically connect negative electrode 24 to case body 31. Negative electrode 24 includes a negative electrode tab that extends downward, and the negative electrode tab may be connected to a bottom plate part of case body 31.

Case body 31 is provided in an outer peripheral surface of its upper end part with groove part 31a in an annular shape formed by press molding or the like from the outside, and is provided on the upper end part with overhang part 31b overhanging inward in a radial direction along with formation of groove part 31a. Overhang part 31b supports sealing body 32 with gasket 35 interposed therebetween on its upper surface. Case body 31 includes upper end opening edge part G that is caulked to be bent inward of battery case 30 with gasket 35 disposed on an inner peripheral side, and an opening of case body 31 is sealed by sealing body 32 being vertically sandwiched between upper end opening edge part G and overhang part 31b with gasket 35 interposed therebetween.

Sealing body 32 is made of metal and has a substantially disk shape. Sealing body 32 is provided with exhaust valve 34 in a substantially circular shape with an outer peripheral edge defined by thin wall part 33 in an annular shape. Exhaust valve 34 bursts outward when the inside of battery case 30 reaches a predetermined pressure or more to break or melt thin wall part 33, and thus exhausting gas inside. That is, each of the plurality of batteries 20 is provided at one axial end with exhaust valve 34 that opens due to an increase in internal pressure. At this time, an outer surface (lower surface in Fig. 1B) of hollow member 60 faces the outside of one axial end (upper end in Fig. 1B) serving as an exhaust valve side end of battery 20 with potting material 70 injected into pack case 80. Figs. 1A and 1B each illustrate potting material 70 with a sandy part.

Hollow member 60 is provided with only a hole serving as opening 61 connected to exhaust port 81 described later of pack case 80. This configuration enables potting material 70 to be prevented from entering the inside of hollow member 60 during assembly of battery pack 10 as described later, so that high temperature gas can be satisfactorily exhausted from battery 20 to the outside of pack case 80 when battery 20 is in an abnormal state. Then, potting material 70 is provided around battery 20, so that a chain reaction of thermal runaway of battery 20 can be prevented by absorbing or alleviating heat generated by battery 20 using potting material 70. The power storage pack of the present disclosure does not necessarily require heat absorption using the potting material.

First holder 41 and second holder 51 of holder 40 are each made of a curable resin, for example. The curable resin constituting each of holders 41, 51 is a resin having a cross-linked structure that does not melt even when exposed to a high temperature of 600°C or higher, and is carbonized without melting even when exposed to a high temperature of 800°C to 1000°C, for example, to maintain the shape of each of holders 41, 51. Specific examples of the resin include thermosetting resins such as unsaturated polyester, an epoxy resin, a melamine resin, and a phenol resin. Each of holders 41, 51 is not limited to the curable resin, and may be made of a thermoplastic resin such as polycarbonate, polyethylene, polypropylene, polyvinyl chloride, or polystyrene.

First holder 41 includes a plurality of first containers 43 each of which is provided with holder opening 44 axially facing exhaust valve 34 of corresponding one of batteries 20. Holder opening 44 is in a circular shape, for example.

First holder 41 is also provided on its side surface with positive electrode terminal plate 65 is provided, and a plurality of positive electrode lead parts 66 extending from positive electrode terminal plate 65 is electrically connected to sealing body 32 serving as a positive electrode terminal at one end part of battery 20 through holder opening 44.

Each of a plurality of batteries 20 as described above includes opposite end parts in a longitudinal direction that are accommodated and held by first holder 41 and second holder 51, thereby forming battery block 12. Each of holders 41, 51 restricts a distance between batteries 20. Each of holders 41, 51 includes containers 43 and holder openings 44 provided at respective bottoms of containers 43 according to the number and placement positions of batteries 20 constituting battery block 12. For example, the plurality of batteries 20 is provided side by side in a width direction (front-back direction of the sheet of Fig. 1A) orthogonal to the longitudinal direction of pack case 80, or provided in a staggered placement, in each battery block 12, and holder openings 44 are formed according to corresponding positions of the plurality of batteries 20. Each of holders 41, 51 exposes a part of each of the plurality of batteries 20 through corresponding one of holder openings 44.

Fig. 1A illustrates two battery blocks 12 disposed separately in the longitudinal direction of pack case 80. Two battery blocks 12 include respective exhaust valve side ends disposed on the same side (right side in Fig. 1A) in the longitudinal direction of pack case 80. The number of battery blocks 12 disposed inside pack case 80 is not limited to two, and may be only one, or three or more. When a current collector electrically connecting the plurality of batteries 20 is used in each battery block 12, battery blocks 12 may be connected to each other by extending a part of the current collector, or by passing over hollow member 60 using another conductive member.

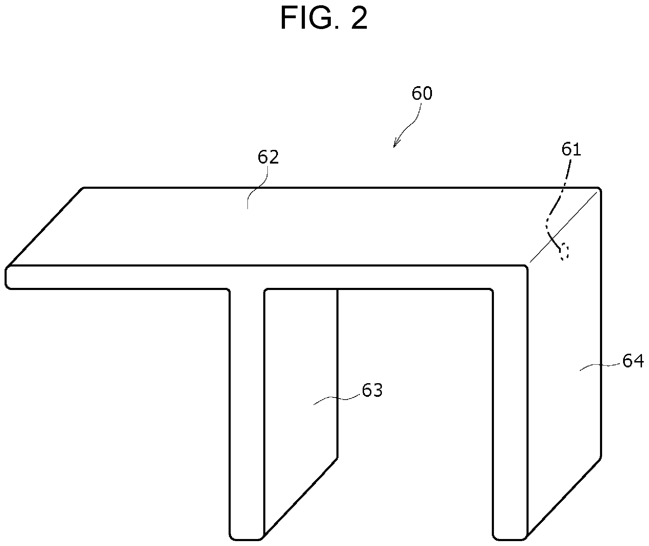

Pack case 80 is further provided inside with hollow member 60. As illustrated in Fig. 2, hollow member 60 is in the shape of a flexible bag formed of a sheet material made of a resin such as polyvinyl chloride, polyethylene, or polypropylene and having a small thickness (e.g., less than or equal to 0.1 mm, preferably less than or equal to 0.02 mm). Hollow member 60 may be transparent or translucent. As described later, after hollow member 60 is disposed inside pack case 80 and potting material 70 injected outside hollow member 60 is cured, opening 61 connected to exhaust port 81 of pack case 80 is formed at an upper part of one end part (right end part in Fig. 2) in a longitudinal direction of hollow member 60. Hollow member 60 is preferably configured such that no hole is normally formed other than opening 61 connected to exhaust port 81 or no hole is formed on a surface facing the battery block. The shape of the hollow member of the present disclosure is not limited to the shape of a bag. The hollow member may have the shape of a hollow box.

Fig. 2 illustrates hollow member 60 expanded by air injected inside. As illustrated in Fig. 2, hollow member 60 includes first part 62 in a long and flat rectangular parallelepiped shape disposed at an upper end of pack case 80, and a plurality of second parts 63, 64 each of which is in a rectangular parallelepiped shape extending in a downward direction orthogonal to corresponding one of a plurality of positions in the longitudinal direction of first part 62 while being inflated by air injecting inside. Each of the plurality of second parts 63, 64 is disposed between the plurality of corresponding battery blocks 12 or between the exhaust valve side end of one battery block 12 and side plate part 82 at an end of pack case 80 in the longitudinal direction, the end being close to exhaust port 81.

Then, potting material 70 is injected into the inside of pack case 80 and the outside of hollow member 60, and is more specifically filled and cured. Examples of potting material 70 include a resin material such as a urethane resin, a silicone resin, or an epoxy resin. Potting material 70 is injected into pack case 80 and then cured in a thermostatic bath or the like. At this time, the potting material comes into contact with a surface of the exhaust valve side end of battery 20 exposed from first holder 41. Potting material 70 may contain a heat absorbing material such as aluminum hydroxide.

As illustrated in Fig. 1B, hollow member 60 is disposed inside pack case 80 while having an outer surface facing the exhaust valve side end of battery 20 with potting material 70 filled therebetween. At this time, the outer surface of hollow member 60 includes a part facing at least exhaust valve side ends of the plurality of batteries 20, the part adhering to potting material 70. Fig. 1B illustrates hollow member 60 with a thickness exaggerated to facilitate understanding of a position of hollow member 60. Hollow member 60 adheres to potting material 70, and thus facilitating tearing of hollow member 60 together with potting 70 at the time of valve opening. Even after a part of hollow member 60 is torn, a duct space in an untorn part of hollow member 60 can be easily maintained.

As illustrated in Fig. 1A, opening 61 of hollow member 60 is connected to exhaust port 81 of pack case 80. This configuration allows first part 62 and the plurality of second parts 63, 64 of hollow member 60 to form the duct space for exhausting high temperature gas exhausted from battery 20 when battery 20 is in an abnormal state.

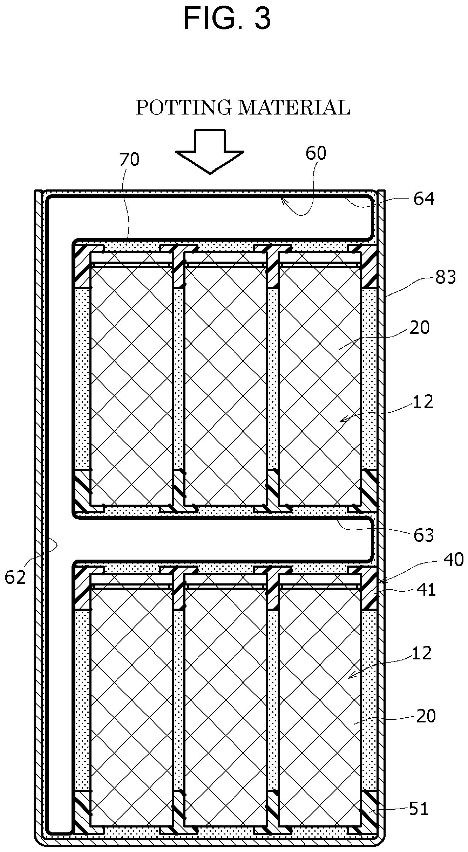

Work of injecting potting material 70 into pack case 80 is performed as follows, for example. First, pack case 80 is formed including body case 83 (Fig. 3) and a lid part detachably attached to one longitudinal end of body case 83. As illustrated in Fig. 3, the plurality of battery blocks 12 and hollow member 60 with its inside expanded are disposed inside pack case 80 with body case 83 disposed with a longitudinal direction aligned with a vertical direction and with the one longitudinal end facing upward. At this time, hollow member 60 is provided with no opening and is in a sealed state. Then, after potting material 70 is injected from above body case 83, the lid part is attached to body case 83 to close an opening of body case 83. After that, opening 61 is formed in hollow member 60 with potting material 70 cured using a needle-shaped tool or the like through exhaust port 81 formed in the lid part, thereby forming battery pack 10. Opening 61 may be formed in hollow member 60 before the lid part is attached to body case 83. Even when opening 61 is formed in hollow member 60 to fail to maintain a shape of a sealed state, a space allowing gas to flow can be formed inside hollow member 60 if potting curing is completed. Hollow member 60 may be inflated after being inserted into body case 83, or may be inflated before being inserted.

Hollow member 60 is expanded into a shape that is not limited to the shape illustrated in Fig. 2, and can be changed in shape according to the number and placement positions of battery blocks 12 disposed in pack case 80, for example. Two battery blocks 12 facing each other may be disposed with respective exhaust valve side ends facing each other. At this time, the plurality of second parts of the hollow member includes a second part that is disposed between side plate part 82 of pack case 80 and an end of battery block 12 on a side opposite to the exhaust valve, and that may be eliminated.

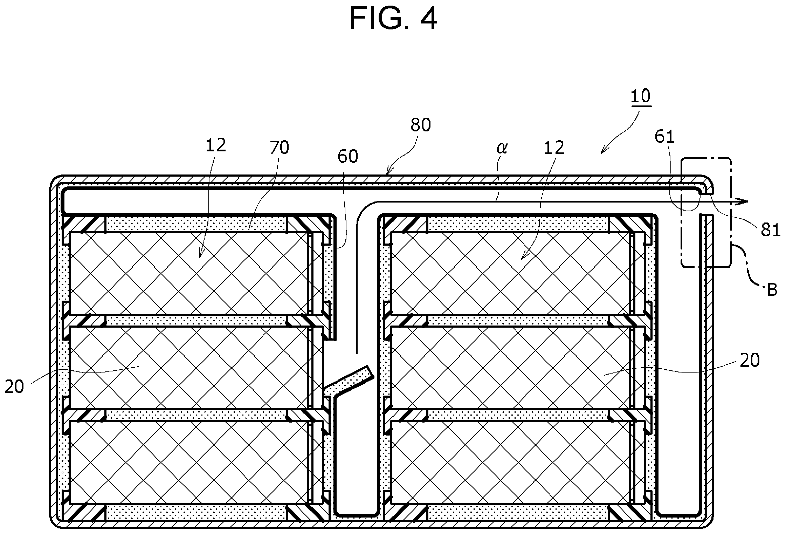

Fig. 4 is a schematic sectional view illustrating a state in which an abnormality has occurred in some batteries 20 constituting battery pack 10 and high temperature gas is exhausted to the outside from battery 20 in which the abnormality has occurred. When an abnormality occurs in some batteries 20 to increase battery internal pressure abnormally, exhaust valve 34 (Fig. 1B) of the abnormal battery is broken and burst out outward. At this time, hollow member 60 faces the exhaust valve end of battery 20 with potting material 70 filled therebetween, so that high temperature gas of the abnormal battery breaks through potting material 70 and hollow member 60 to enter the inside of hollow member 60. Then, the gas ejected from the abnormal battery passes through the inside of hollow member 60 and is exhausted to the outside through opening 61 of hollow member 60 and exhaust port 81 of pack case 80 as indicated by arrow α in Fig. 4. Although Fig. 4 illustrates a diagram in which an openable lid of hollow member 60 is opened to allow high temperature gas to enter the inside, the gas actually enters the inside while breaking through hollow member 60. Unlike the above configuration, the outer surface of hollow member 60 may face the outside of one axial end serving as the exhaust valve side end of battery 20 without the potting material filled.

Battery pack 10 includes hollow member 60 provided with a hole that is not provided on a surface facing battery block 12, or with only opening 61 connected to exhaust port 81 of pack case 80, and thus enables potting material 70 to be prevented from entering the inside of hollow member 60 through the hole during assembly of battery pack 10. This configuration enables preventing an internal space of hollow member 60 as a gas discharge path inside battery pack 10 from being filled with potting material 70, and thus enables satisfactorily exhausting high temperature gas from battery 20 to the outside of pack case 80 when battery 20 is in an abnormal state. As a result, battery pack 10 can be improved in reliability. Then, potting material 70 is provided around battery 20, so that the chain reaction of thermal runaway of battery 20 can be prevented by holding battery 20 and absorbing or alleviating heat generated by battery 20 using potting material 70. This configuration also allows battery pack 10 to be improved in reliability.

The configuration of the present example also enables reducing a sealing part with an adhesive for preventing potting material 70 from leaking out to a part other than a periphery of battery 20 inside pack case 80 even though potting material 70 is provided around battery 20. For example, a sealing part with an adhesive for preventing leakage of potting material 70 from between first holder 41 and second holder 42 or between each of holders 41, 42 and battery 20 can be eliminated. As described above, the potting material is not necessarily cured and molded by battery block 12 alone in holder 40, so that structure of holder 40 and structure of battery pack 10 can be simplified. Potting material 70 also has a waterproof function, so that a waterproof bag for preventing water from entering battery 20 is not required to be provided inside pack case 80. This configuration also enables battery pack 10 to be simplified in structure. Potting material 70 is also filled between the exhaust valve side end of each battery 20 and hollow member 60, so that the exhaust valve side end of battery 20 is not necessarily covered with a protective plate for preventing the chain reaction of thermal runaway of battery 20. This configuration enables reducing the number of parts of battery pack 10, and thus enables structure to be simplified while ensuring reliability.

Hollow member 60 according to the exemplary embodiment is in the shape of a flexible bag formed of a sheet material made of a resin, and includes at least a part of the outer surface, the part facing the exhaust valve side end parts of the plurality of batteries 20 and adhering to potting material 70. This configuration enables high temperature gas from an abnormal battery to easily break through hollow member 60, and thus enables the high temperature gas to flow into hollow member 60.

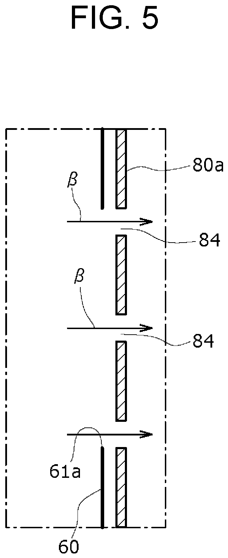

Fig. 5 is a diagram corresponding to an enlarged view of part B of Fig. 4 showing a state in which high temperature gas is exhausted trough openings of hollow member 60 in another example of a battery pack. As in another example illustrated in Fig. 5, a plurality of small holes 84 each having a diameter of less than or equal to 1 mm, for example, may be formed as exhaust ports in pack case 80a. Then, one or more openings 61a are formed in hollow member 60 to be connected to the plurality of corresponding small holes 84. For example, openings 61a may be formed in hollow member 60 using a tool or the like after the inside of hollow member 60 is inflated with air and sealed, and hollow member 60 is disposed inside pack case 80 and potting material 70 injected to the outside of hollow member 60 is cured. When an abnormality occurs in some batteries 20, gas exhausted from an abnormal battery is exhausted to the outside through opening 61a and the plurality of small holes 84 as indicated by arrows β in Fig. 5.

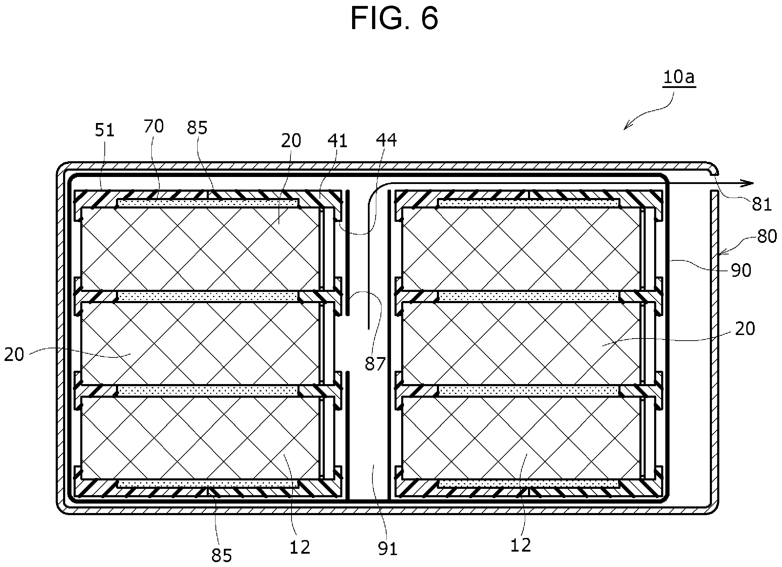

Fig. 6 is a schematic sectional view illustrating a state in which an abnormality has occurred in some batteries 20 in battery pack 10a of a comparative example and high temperature gas is exhausted to the outside from battery 20 in which the abnormality has occurred. Battery pack 10a of the comparative example includes pack case 80 that is provided inside with no hollow member 60. Each battery block 12 includes potting material 70 provided around battery 20, first holder 41 and second holder 51 including respective outer peripheral side end parts approaching each other to form a gap, and sealing part 85 made of an adhesive for preventing leakage of potting material 70, sealing part 85 being provided in the gap. The sealing part made of the adhesive is also provided between each of holders 41, 51 and battery 20.

Each battery block 12 further includes protective plate 87 for preventing a chain reaction of thermal runaway of batteries 20, protective plate 87 being provided in a part covering holder opening 44 of first holder 41 at an exhaust valve side end of each battery 20. When an abnormality occurs in some batteries 20, protective plate 87 is broken by high pressure gas exhausted from any battery 20, and the gas is exhausted to the outside through exhaust path 91 between battery blocks 12 and exhaust port 81 as illustrated in Fig. 6. Additionally, pack case 80 is provided inside with waterproof pack 90 that is sealed while accommodating the plurality of battery blocks 12. Waterproof pack 90 prevents water from entering each battery 20 from the outside.

Although such a comparative example requires sealing part 85, protective plate 87, and waterproof pack 90 to be provided for preventing leakage of potting material 70 to result in complicated structure, the exemplary embodiment described above enables reduction in each of sealing part 85, protective plate 87, and waterproof pack 90.

As another example of the exemplary embodiment of battery pack 10, hollow member 60 in a sealed state may be connected on its outer surface to exhaust port 81 of pack case 80 directly or with potting material 70 filled therebetween. When exhaust port 81 of pack case 80 is enlarged to some extent in this case, a part of hollow member 60, the part facing exhaust port 81, may be cleaved by force of gas exhausted from some batteries 20 to exhaust the gas to the outside. Sealing hollow member 60 in this case enables preventing potting material 70 from entering the inside of hollow member 60 through a hole during assembly of battery pack 10.

Although battery pack 10 is described in the exemplary embodiment described above in which battery holder 40 is provided to hold battery 20, battery holder 40 may be eliminated. For example, a holding part for holding battery 20 may be directly formed on an inner surface of a pack case.

Structure of the exhaust valve of battery 20 is not limited to the configuration illustrated in Fig. 1B. For example, the sealing body attached to the case body of battery 20 may be provided inside with a valve body structure that is broken when internal pressure increases, and provided with an outer end that does not break.

Although hollow member 60 disposed inside pack case 80 is described in the exemplary embodiment described above in which hollow member 60 is in the shape of a bag, hollow member 60 is not limited thereto. For example, the hollow member may be made of resin and have rigidity. The hollow member in this case includes a part facing the exhaust valve side end of the battery with the potting material filled therebetween, and the part may be provided with an annular or C-shaped thin wall part to be easily broken by pressure of applied gas.

### REFERENCE MARKS IN THE DRAWINGS

10, 10a: battery pack (power storage pack)
12: battery block (power storage block)
20: battery (power storage device)
22: electrode group
23: positive electrode
24: negative electrode
25: separator
26: insulating plate
27: positive electrode tab
30: battery case
31: case body
32: sealing body
33: thin wall part
34: battery exhaust valve
35: gasket
40: battery holder
41: first holder
43: first container
44: holder opening
51: second holder
60: hollow member
61, 61a: opening
62: first part
63, 64: second part
65: positive electrode terminal plate
66: positive electrode lead part
70: potting material (resin filler)
80: pack case
81: exhaust port
82: side plate part
83: body case
84: small hole
85: sealing part
87: protective plate
90: waterproof pack
91: exhaust path

## Claims

1. A power storage pack comprising:
at least one power storage block including at least one power storage device including an exhaust valve;
a pack case accommodating the at least one power storage block and including an exhaust port;
a hollow member interposed between the pack case and the at least one power storage block, a part of the hollow member facing the exhaust valve of the at least one power storage device; and
a resin filler interposed between the at least one power storage device and the hollow member,
the hollow member including an opening and an outer surface any of which is connected to the exhaust port of the pack case.

2. The power storage pack according to Claim 1, wherein the resin filler is interposed between the exhaust valve of the at least one power storage device and the hollow member.

3. The power storage pack according to Claim 1, wherein the hollow member is in a shape of a flexible bag formed of a sheet material made of a resin, and the outer surface of the hollow member includes a part facing an end, closer to the exhaust valve, of the at least one power storage device, the part adhering to the resin filler.

4. The power storage pack according to any one of Claims 1 to 3, wherein
the at least one power storage device comprises a plurality of power storage devices,
the plurality of power storage devices includes a holder that restricts a distance between the power storage devices,
the holder exposes a part of the plurality of power storage devices, and
the resin filler is in contact with a surface of the part of the power storage devices, the surface being exposed from the holder.
